Europäisches Patentamt

European Patent Office

Office européen des brevets

(11) Veröffentlichungsnummer : **0 526 498 B1**

## (12) EUROPÄISCHE PATENTSCHRIFT

(45) Veröffentlichungstag der Patentschrift :
18.01.95 Patentblatt 95/03

(21) Anmeldenummer : 91907862.6

(22) Anmeldetag : 16.04.91

(86) Internationale Anmeldenummer :
PCT/EP91/00724

(87) Internationale Veröffentlichungsnummer :
WO 91/16756 31.10.91 Gazette 91/25

(51) Int. Cl.⁶ : **H02M 3/335**

(54) **GLEICHSTROMUMRICHTER MIT STROMBEGRENZUNG.**

(30) Priorität : **26.04.90 EP 90107934**

(43) Veröffentlichungstag der Anmeldung :
**10.02.93 Patentblatt 93/06**

(45) Bekanntmachung des Hinweises auf die
Patenterteilung :
**18.01.95 Patentblatt 95/03**

(84) Benannte Vertragsstaaten :
**AT BE CH DE DK ES FR GB GR IT LI NL SE**

(56) Entgegenhaltungen :
**DE-A- 2 613 896**

(56) Entgegenhaltungen :
**DE-B- 2 838 009**
**US-A- 4 772 995**
**"Datenbuch SIPMOS-Kleinsignaltransistoren,
Leistungstransistoren", 1985, Siemens AG,
München, see page 24, last paragraph; figure
7b (cited in the application)**

(73) Patentinhaber : **SIEMENS
AKTIENGESELLSCHAFT
Wittelsbacherplatz 2
D-80333 München (DE)**

(72) Erfinder : **BRAKUS, Bogdan
Peter-Dörfler-Strasse 3
D-8035 Stockdorf (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

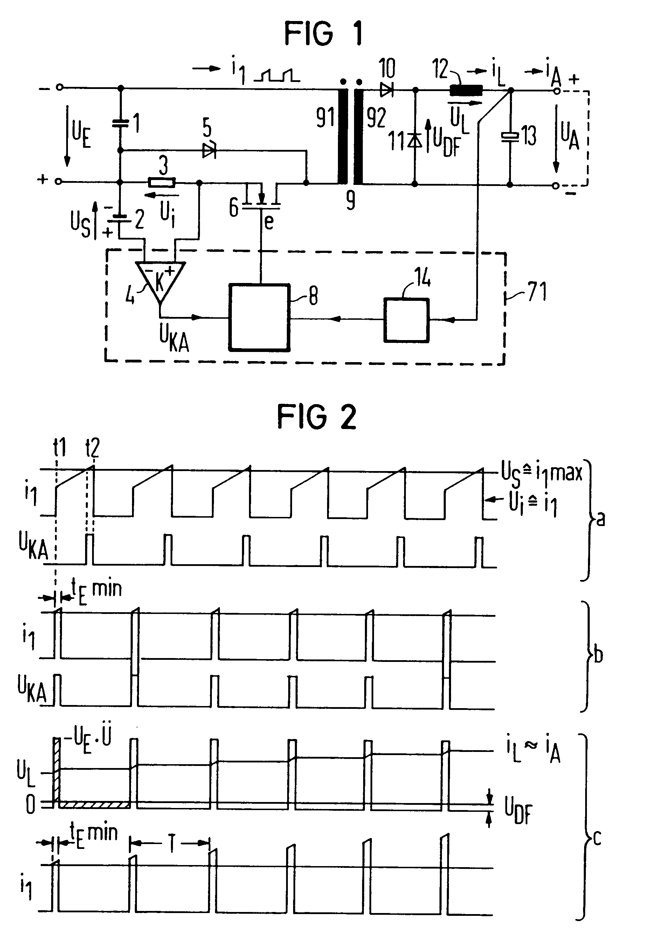

Fig. 1 zeigt einen Gleichstromumrichter mit Momentanwert-Strombegrenzung, die auch als puls by puls limitation bezeichnet wird und aus der DE-PS 26 13 896 bekannt ist.

Bei dem in Fig. 1 gezeigten Eintakt-Durchflußumrichter liegt die Eingangsspannung $U_E$ am Kondensator 1 und die Ausgangsspannung $U_A$ am Kondensator 13. Parallel zum Kondensator 1 liegt eine aus der Primärwicklung 91 des Transformators 9, der Drain-Source-Strecke des Feldeffekttransistors 6 und dem Meßwiderstand 3 gebildete Serienschaltung. Parallel zur Serienschaltung aus Meßwiderstand 3 und Source-Drain-Strecke des Feldeffekttransistors 6 liegt die zur Spannungsbegrenzung dienende Z-Diode 5. Zwischen der Sekundärwicklung 92 des Transformators 9 und dem Kondensator 13 liegt die Gleichrichterdiode 10. In einem auf die Gleichrichterdiode 10 folgenden Querzweig ist die Freilaufdiode 11 angeordnet. In einem Längszweig zwischen Freilaufdiode 11 und Kondensator 13 liegt die Drossel 12.

Die Steuerelektrode des Feldeffekttransistors 6 ist an die Steuervorrichtung 8 angeschlossen, die einen Treiber, einen Taktgeber und einen Pulsweitenmodulator enthält. Die Steueranordnung 8 wird sowohl durch den Komparator 4 als auch durch den Spannungsregler 14 gesteuert. Der Komparator 4 ist mit seinem Minuseingang über die Sollspannungsquelle 2 an den einen und mit seinem Pluseingang unmittelbar an den anderen Anschluß des Meßwiderstandes 3 angeschlossen. Der Spannungsregler 14 dient zur Regelung der Ausgangsspannung und ist daher mit seinem Istwerteinang an den Ausgang des Umrichters angeschlossen.

Mit einer derartigen Schaltungsanordnung läßt sich in vielen Fällen eine ausreichende Strombegrenzung erzielen. Bei Umrichtern mit relativ hoher Ausgangsspannung tritt jedoch prinzipbedingt ein sogenanntes "Auslaufen der Kennlinie" ein, d.h. im Kurzschlußfall ist die Begrenzungswirkung reduziert oder aufgehoben. Dies kann schließlich bis zur Zerstörung von Bauteilen führen. Die Ursache für ein derartiges Verhalten liegt in der restlichen minimalen Pulsbreite des Einschaltpulses, die sich durch eine Reihe von Totzeiten in der Steuerkette ergibt. Ist im Ausgangskreis ein LC-Glied mit einer Drossel im Längszweig und einem Kondensator im Querzweig angeordnet und ist - bedingt durch die genannte minimale Pulsbreite - die an die Ausgangsdrossel angelegte positive Spannungszeitfläche beim Einschalten größer als die negative in der Ausschaltphase, so steigt die magnetische Energie und damit der Strom von Periode zu Periode unbegrenzt an. Dies bestätigt auch folgende Ungleichung, die beim Klemmenkurzschluß gilt:

$$U_E \cdot \ddot{U} \cdot t_{E\,min} > U_{DF} \cdot (T - t_{E\,min}) \quad (1)$$

mit

| | |
|---|---|
| $U_e$ | Eingangsspannung |
| $\ddot{u}$ | Übersetzung des Transformators |
| $t_{E\,min}$ | minimale Einschaltdauer |
| $U_{DF}$ | Durchlaßspannung der Freilaufdiode |
| $T$ | Periodendauer |

In Fig. 2 sind die typischen Betriebszustände dargestellt:

a Einsatz der Strombegrenzung

b Grenzfall, bei dem die minimale Einschaltdauer gerade noch die Begrenzungswirkung zuläßt

c Reduzierte Begrenzungswirkung im Kurzschluß durch die Bedingung (1)

Wie Fig. 2 zeigt, ist das geschilderte Problem mit einer reinen Momentanwertbegrenzung nicht lösbar.

Es ist daher zweckmäßig, für die Strombegrenzung im Kurzschlußfall eine Zusatzschaltung vorzusehen.

Die Erfindung bezieht sich auf einen wie im Oberbegriff des Patentanspruchs 1 angegebenen Gleichstromumrichter.

Ein derartiger Umrichter ist bereits aus der DE-B1-28 38 009 bekannt.

Bei dem bekannten Umrichter wird ein Leistungsschalttransistor durch einen Taktgeber mit Einschaltimpulsen konstanter Arbeitsfrequenz angesteuert. Zur Regelung der Ausgangsspannung wird der Tastgrad, das heißt der Quotient der Einschaltzeit des Leistungsschalttransistors zur Periodendauer verändert. Bei Überlast am Ausgang des Gleichstromumrichters wird zum Schutz der Bauteile der Strom im Leistungskreis begrenzt. Dies wird durch eine Verkürzung der Einschaltzeit erreicht. Dabei wird der Schalttransistor mit Hilfe einer Strommeßschaltung gesperrt, sobald der mit Hilfe eines Stromwandlers gemessene Momentanwert des durch den Schalttransistor fließenden Stromes einen vorgegebenen Grenzwert übersteigt.

Da die Speicherzeit des Schalttransistors eine Mindesteinschaltzeit bedingt und diese Mindesteinschaltzeit eine wirtschaftlich nicht vertretbare Überbemessung der Leistungskreis-Bauteile für den Kurzschlußfall erfordern würde, greift bei dem bekannten Umrichter eine weitere Strommeßschaltung, die über eine Diode an die Bürde des Stromwandlers angeschlossen ist ein, wenn die Mindesteinschaltzeit des Schalttransistors unterschritten werden müßte und die Spannung an der Bürde des Stromwandlers daher um mehr als die Schwellenspannung der Diode angestiegen ist. Sie legt - gegebenenfalls wiederholt - Schaltpausen von der Dauer mehrerer Perioden ein, so daß der Strom im Leistungskreis nicht über eine vorgegebene Grenze steigt.

Auf diese Weise läßt sich eine weitergehende Strombegrenzung erzielen.

Die Zusatzschaltung sorgt dafür, daß die Ausgangsdrossel im magnetischen Gleichgewicht bleibt und die Begrenzungswirkung auch im Kurzschluß aufrechterhalten wird, ist jedoch mit einem recht großen Aufwand verbunden.

Aufgabe der Erfindung ist es, einen getakteten Umrichter der eingangs genannten Art derart auszubilden, daß für eine wirksame Strombegrenzung als Stromsensor ein möglichst niederohmiger Strommeßwiderstand ausreicht und auf verlustarme Weise ein Spitzenwert des Stromes gebildet und gespeichert wird. Insbesondere soll sich bei geringem Aufwand eine geringe Temperaturabhängigkeit ergeben.

Gemäß der Erfindung wird der Umrichter zur Lösung dieser Aufgabe in der im kennzeichnenden Teil des Patentanspruchs 1 angegebenen Weise ausgebildet.

Der weitere elektronische Schalter ist während der gesamten Sperrphase des im Hauptstromkreis liegenden elektronischen Schalters ebenfalls gesperrt. Er kann während der gesamten Einschaltphase des im Hauptstromkreis liegenden elektronischen Schalters ebenfalls leitend sein. Da der zu speichernde Spitzenwert erst am Ende der leitenden Phase entsteht, kann der weitere elektronische Schalter gegebenenfalls so angesteuert werden, daß er nur in einem zeitlichen Teilbereich der Einschaltphase des im Hauptstromkreis liegenden Schalttransistors leitend gesteuert ist, derart, daß beide elektronische Schalter gleichzeitig von leitenden in den gesperrten Zustand übergehen. Auf diese Weise lassen sich Einschaltstromspitzen beim Anschalten des Kondensators reduzieren oder Spannungsspitzen ausblenden, die aufgrund von Einschaltstromspitzen des Hauptstromkreises am Meßwiderstand auftreten. Die Erfindung hat ferner den Vorteil, daß bei besonders geringem Aufwand eine geringe Temperaturabhängigkeit gewährleistet ist.

In der nicht vorveröffentlichten europäischen Patentanmeldung mit dem Aktenzeichen 89 111 982.8 ist bereits ein getakteter Umrichter bekannt, der zusätzlich zu einem im Hauptstromkreis liegenden elektronischen Schalter einen weiteren elektronischen Schalter aufweist, der zwischen einem im Hauptstromkreis liegenden Meßwiderstand und einer RC-Parallelschaltung angeordnet ist. Jener zusätzliche elektronische Schalter wird in bezug auf den erstgenannten elektronischen Schalter verzögert ein- und ausgeschaltet. Die Spannung am Kondensator folgt der Meßspannung am Meßwiderstand. Zum Zeitpunkt der verzögerten Ausschaltung des zusätzlichen elektronischen Schalters ist der Kondensator bereits entladen.

Aus dem Datenbuch SIPMOS-Kleinsignaltransistoren, Leistungstransistoren, Siemens AG, Ausgabe 84/85, Best.Nr. B3-3209, Seiten 24 und 25 ist zwar bekannt, daß sich Gleichrichterschaltungen mit extrem niedrigen Durchlaßspannungen mit Hilfe von Feldeffekttransistoren realisieren lassen. Bei der Realisierung einer solchen Gleichrichterschaltung ist jedoch eine Steuerschaltung erforderlich, die in Abhängigkeit von der Polarität der am Feldeffekttransistor liegenden Spannung den Feldeffekttransistor in den leitenden oder gesperrten Zustand überführt.

Der erfindungsgemäße Umrichter kommt in vorteilhafter Weise ohne eine derartige Steuerschaltung aus.

Weitere vorteilhafte Ausgestaltungen der Erfindung ergeben sich aus den weiteren Unteransprüchen.

Die Erfindung wird anhand der in den Figuren 3, 5 und 6 gezeigten Ausführungsbeispiele sowie anhand der Impulsdiagramme nach den Figuren 4 und 7 näher erläutert.

Es zeigen

Fig. 1 einen bekannten Umrichter,

Fig. 2 ein Impulsdiagramm für den Umrichter nach Fig. 1,

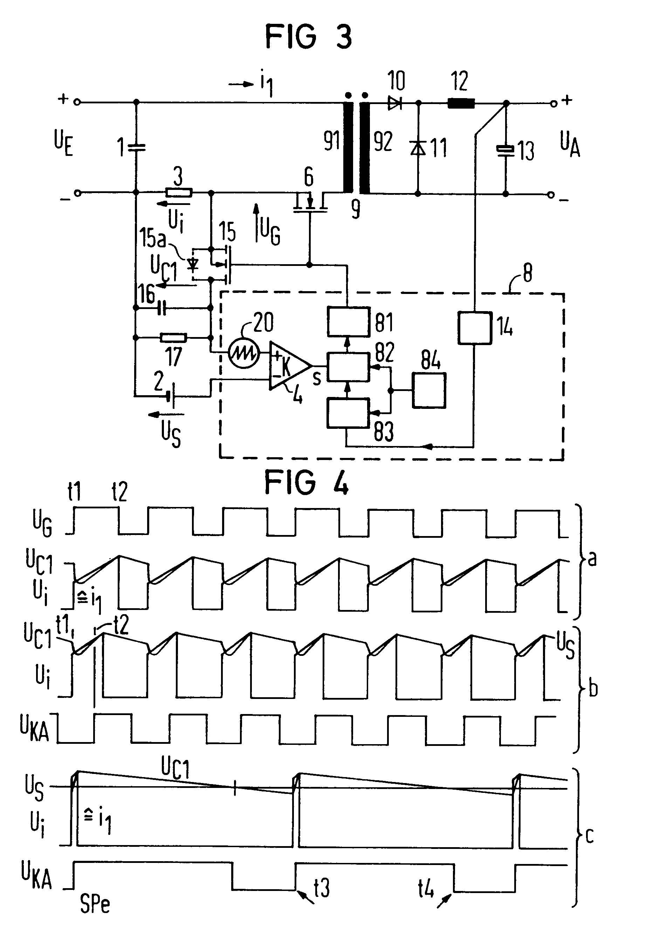

Fig. 3 einen Umrichter mit Unterdrückung von Einschaltimpulsen mit Hilfe eines Komparators,

Fig. 4 ein Impulsdiagramm für den Umrichter nach Fig. 3,

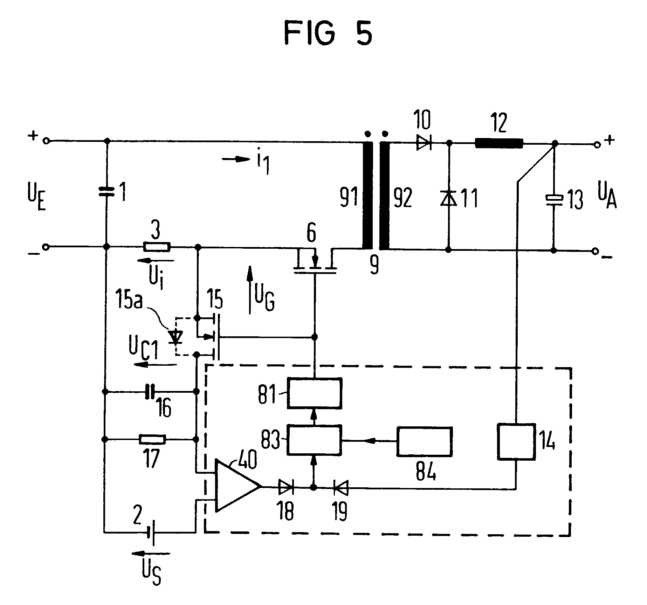

Fig. 5 einen Umrichter mit Unterdrückung von Einschaltimpulsen mit Hilfe eines Differenzverstärkers,

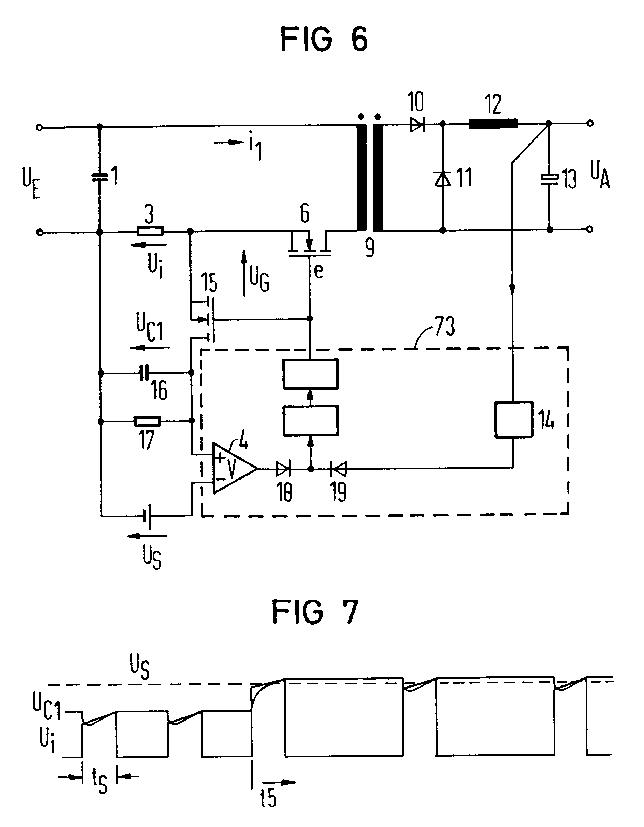

Fig. 6 einen Umrichter mit einem spannungsgesteuerten Oszillator und

Fig. 7 ein Impulsdiagramm für den Umrichter nach Fig. 6.

In Fig. 3 ist ein getakteter Umrichter nach der Erfindung dargestellt.

Bei dem in Fig. 3 gezeigten Eintakt-Durchflußumrichter liegt die Eingangsspannung $U_E$ am Kondensator 1 und die Ausgangsspannung $U_A$ am Kondensator 13. Parallel zum Kondensator 1 liegt eine aus der Primärwicklung 91 des Transformators 9, der Drain-Source-Strecke des Feldeffekttransistors 6 und dem Meßwiderstand 3 gebildete Serienschaltung. Zwischen der Sekundärwicklung 92 des Transformators 9 und dem Kondensator 13 liegt die Gleichrichterdiode 10. In einem auf die Gleichrichterdiode 10 folgenden Querzweig ist die Freilaufdiode 11 angeordnet. In einem Längszweig zwischen Freilaufdiode 11 und Kondensator 13 liegt die Drossel 12.

An den Meßwiderstand 3 ist eine Auswerteanordnung angeschlossen, die aus dem Feldeffekttransistor 15, dem Kondensator 16 und dem einen Entladestromkreis bildenden Widerstand 17 besteht. Der Feldeffekttransistor 15 ist mit seiner Source-Elektrode unmittelbar an die Source-Elektrode des Feldeffekttransistors 6 und mit seiner Steuerelektrode unmittelbar an die Steuerelektrode des Feldeffekttransistors 6 geführt. Beide Feldeffekttransistoren sind N-Kanal-MOS-Transistoren.

EP 0 526 498 B1

Der Kondensator 16 und die Sollspannungsquelle 2 sind einpolig miteinander verbunden. Der Komparator 4 ist mit seinem invertierenden Eingang an die Sollspannungsquelle 2 und mit seinem nicht invertierenden Eingang über die Dreieckspannungsquelle 20 an den Kondensator 16 angeschlossen. Dabei sind die Source-Elektroden der beiden Feldeffekttransistoren 6 und 15 unmittelbar miteinander und mit dem Meßwiderstand 3 verbunden.

Die Steuervorrichtung 8 dient zur Regelung der Ausgangsspannung $U_A$. Der Regelkreis verläuft vom Ausgang des Umrichters über den Spannungsregler 14, den Pulsweitenmodulator 83, die Logikschaltung 82 und den Treiber 81 zum Verbindungspunkt der Steuerelektroden der beiden Feldeffekttransistoren 6 und 15.

Die Logikschaltung 82 und der Pulsweitenmodulator 83 werden durch den Taktgeber 84 gemeinsam gesteuert. Die Logikschaltung 82 ist außerdem mit einem Sperreingang an den Ausgang des Komparators 4 angeschlossen, der die Sollspannung $U_S$ des Sollspannungsgebers mit einer Summenspannung vergleicht, die aus der am Kondensator 16 liegenden Spannung $U_{C1}$ und der Dreieckspannung des Dreieckspannungsgebers 20 besteht. Gegebenenfalls kann der Dreieckspannungsgeber 20 anstatt im Istwertzweig im Sollwertzweig liegen. Bei entsprechender Wahl des Arbeitsbereiches kann der Dreieckspannungsgeber 20 durch einen Kurzschluß ersetzt werden.

Mit Hilfe des synchron mit dem Schalttransistor 6 angesteuerten N-Kanal-MOS-Transistors 15 wird die Kapazität C1 des Kondensators 16 niederohmig, d.h. schnell und genau auf den Maximalwert der Spannung am Meßwiderstand 3 aufgeladen. Die im Feldeffekttransistor 15 zwangsläufig enthaltene und daher strichliert dargestellte, vergleichsweise langsame Inversdiode 15 a des MOS-Transistors 15 ist dabei praktisch wirkungslos, da ihre Schwellenspannung in Durchlaßrichtung nicht erreicht wird. In der Sperrphase wird der Feldeffekttransistor 15 sehr schnell hochohmig und verhindert eine rückwärtige Entladung. Der Kondensator 16 kann mit der gewünschten Zeitkonstante über den Widerstand 17 mehr oder weniger langsam entladen werden. Da der Restwiderstand $R_{DSON}$ des Feldeffekttransistors 15 sehr klein ist gegenüber dem Widerstandswert des Entladewiderstandes 17, entspricht die Spannung am Kondensator 16 sehr gut dem Maximalwert des gemessenen Stromes.

Das Impulsdiagramm nach Fig. 4 zeigt diesen Sachverhalt. Die Ausgangsspannung $U_G$ des Treibers 81 besteht aus Einschaltimpulsen, die den Gate-Source-Strecken der Feldeffekttransistoren 6 und 15 zugeführt sind und jeweils zum Zeit t1 in den Ein-Zustand und zum Zeit t2 in den Aus-Zustand überführen. Die Spannung $U_l$ fällt am Meßwiderstand 3 ab und entspricht dem im Hauptstromkreis des Umrichters fließenden Strom i1. Am Kondensator 16 ergibt sich die Spannung $U_{C1}$. Die Ausgangsspannung $U_{KA}$ des Komparators 4 ist eine Folge von Rechteckimpulsen. Die Anstiegsflanke zum Zeitpunkt t3 stellt den Beginn eines Sperrsignals, die Abstiegsflanke zum Zeitpunkt t4 den Beginn eines Freigabesignales dar.

Die kurzzeitige Entladung des Kondensators 16 zu Beginn des Pulses, verursacht durch den schrägen Anstieg des Stromes i1, ist praktisch bedeutungslos, da der Spitzenwert des Stromes i1 erst am Ende der leitenden Phase entsteht und nach dem Abschalten gespeichert bleibt. Der prinzipielle Verlauf des dem Strom i1 entsprechenden Meßwertes $U_l$ ist in Fig. 4 a dargestellt.

Die Spannung am Kondensator 16 wird nach Fig. 3 mit Hilfe eines Komparators ausgewertet. Die Dreieckspannungsquelle 20 liefert ein externes synchrones Dreiecksignal, das der Spannung $U_{C1}$ überlagert wird. Eine derartige Überlagerung eines externen synchronen Dreieckssignals, die aus der DE-PS 26 13 896 an sich bekannt ist, ist bei der Auswertung mit dem Komparator 4 vorteilhaft. Damit wird zum einen ein definiertes Schaltkriterium gewonnen, zum anderen wird die Stabilität im subharmonischen Bereich erhöht. In dem Impulsdiagramm nach Fig. 4 ist dieses Dreiecksignal der Übersichtlichkeit halber nicht dargestellt.

In Fig. 4 b und 4 c ist der prinzipielle Signalverlauf bei der Strombegrenzung nach dem Einsatz und im Kurzschlußfall dargestellt. Die Zahl der ausgelassenen Impulse im Fall c hängt von der minimalen Pulsbreite und der Durchlaßspannung der Freilaufdiode 11 ab.

Bei dem Umrichter nach Fig. 5 ist anstelle des Komparators 4 in Fig. 3 ein Operationsverstärker 40 vorgesehen. Der Ausgang des Operationsverstärkers 40 und der Ausgang des Spannungsreglers 14 sind über je eine Diode 18 bzw. 19 an den Eingang des Pulsweitenmodulators 83 geführt, so daß sich eine sogenannte Ablöseregelung ergibt. Der Treiber 81 ist unmittelbar an den Impulsweitenmodulator 83 angeschlossen.

Bei dieser Ausführungsform steuert die verstärkte Regelabweichung den Pulsbreitenmodulator 83 und stellt den Arbeitspunkt ein. Im Kurzschlußfall kann die verstärkte Regelabweichung bei Bedarf den Pulsbreitenmodulator 83 für mehrere Perioden sperren und dadurch die Begrenzungswirkung voll aufrechterhalten. Der Umrichter arbeitet ähnlich wie in Fig. 4 c gezeigt.

Eine weitere Ausführungsform ist in Fig. 6 dargestellt. Sie ist besonders bei Hochfrequenzumrichtern von Vorteil. Im Überlastfall verstärkt der Operationsverstärker 4 die Regelabweichung $U_S$-$U_{C1}$ und steuert den spannungsgesteuerten Oszillator zu niedrigeren Frequenzen hin, wie in Fig. 7 dargestellt. Die Einschaltdauer des Strompulses bleibt zwar konstant. Durch stetige Frequenzreduzierung wird jedoch der gewünschte Gleichgewichtszustand auch bei einem Kurzschluß der Ausgangsklemmen des Umrichters erzielt.

4

Die in den Figuren 1, 3, 5 und 6 dargestellten Umrichter sind in einem sehr weiten Frequenzbereich einsetzbar, da der Feldeffekttransistor ein kleiner MOS-Transistor mit Schaltzeiten von etwa 5-20 ns sein und sehr geringe parasitäre Kapazitäten, z.B. etwa 5 pF besitzen kann. Die Schaltfrequenz kann dabei etwa 1-2 MHz betragen.

Der Umrichter kann als Durchfluß- oder als Sperrumrichter mit konstanter Taktfrequenz oder als Umrichter mit Frequenzmodulation ausgebildet sein.

Eine Stromregelung mit überlagerter Spannungsregelung (Current-Mode-Spannungsregelung), bei der als Sollwert des Stromes das Ausgangssignal eines Spannungsreglers dient ist mit Hilfe des Meßsignals am Strommeßwiderstand 3 ohne weiteres möglich, da das Signal am niederohmigen Meßwiderstand 3 auch in den für die Regelung wesentlichen Zeitabschnitten praktisch nicht verfälscht wird.

Bezugszeichenliste

| | |
|---|---|
| 1 | = Kondensator |
| 2 | = Sollspannungsquelle |
| 20 | = Dreieckspannungsquelle (Dreieckspannungsgeber) |
| 3 | = Meßwiderstand |
| 4 | = Komparator, Operationsverstärker |
| 40 | = Operationsverstärker |
| 5 | = Z-Diode |
| 6 | = Feldeffekttransistor (Schalttransistor) |
| 8 | = Steuervorrichtung, Steuerschaltung |
| 81 | = Treiber |
| 82 | = Logikschaltung |
| 83 | = Pulsweitenmodulator |
| 84 | = Taktgeber |
| 9 | = Transformator |
| 91 | = Primärwicklung |
| 92 | = Sekundärwicklung |
| 10 | = Gleichrichterdiode |
| 11 | = Freilaufdiode |
| 12 | = Drossel |
| 13 | = Kondensator |
| 14 | = Spannungsregler |
| 15 | = Feldeffekttransistor (MOS-Transistor) |
| 15a | = Inversdiode |
| 16 | = Kondensator |
| 17 | = (Entlade-) Widerstand, Entladestromkreis |
| 18 | = Diode |
| 19 | = Diode |
| C1 | = Kapazität (des Kondensators 16) |
| t1 | = Zeitpunkt |
| t2 | = Zeitpunkt |
| t3 | = Zeitpunkt |
| t4 | = Zeitpunkt |
| $U_{C1}$ | = Spannung (am Kondensator 16) |
| $U_E$ | = Eingangsspannung |
| $U_A$ | = Ausgangsspannung |
| $U_G$ | = Ausgangsspannung (des Treibers 81) |
| $U_S$ | = Sollspannung |
| $U_i$ | = Spannung (vom Meßwiderstand) (Meßwert) |
| $U_{KA}$ | = Ausgangsspannung (des Komparators 4) |
| $i_1$ | = Strom |
| s | = Anschluß |

# EP 0 526 498 B1

**Patentansprüche**

1. Getakteter Umrichter mit Strombegrenzung, mit einem im Hauptstromkreis angeordneten und mit seinem Steuereingang an eine Steuerschaltung angeschlossen und durch die Steuerschaltung abwechselnd ein-und ausschaltbaren elektronischen Schalter, mit einem in Serie zum elektronischen Schalter angeordneten Stromsensor, mit einer zwischen dem Stromsensor und einem Kondensator (16) mit Entladestromkreis (17) angeordneten Auswerteanordnung und mit einer Steuervorrichtung (4, 8), die an den Kondensator (16) angeschlossen ist und bei über einem vorgegebenem Grenzwert liegenden Kondensatorspannungen die Steuerschaltung (8) im Sinne einer Begrenzung des im Hauptstromkreis fließenden Pulsstromes steuert,
**dadurch gekennzeichnet,**
daß der Stromsensor durch einen Meßwiderstand (3) und die Auswerteanordnung durch einen weiteren elektronischen Schalter gebildet ist, und daß der im übrigen gesperrte weitere elektronische Schalter jeweils während der Einschaltphase des im Hauptstromkreis angeordneten elektronischen Schalters in den leitenden Zustand steuerbar ist und daß der weitere elektronische Schalter durch die Source-Drain-Strecke eines Feldeffekttransistors (15) gebildet ist und daß die Source-Drain-Strecke des Feldeffekttransistors (15) derart gerichtet ist, daß die Inversdiode (15a) des Feldeffekttransistors (15) in bezug auf die am Meßwiderstand (3) auftretende Spannung in Durchlaßrichtung gepolt ist und daß der Meßwiderstand (3) derart bemessen ist, daß die an ihm abfallende Spannung kleiner ist als die Schwellenspannung der Inversdiode (15a) des Feldeffekttransistors (15).

2. Umrichter nach Anspruch 1,
**dadurch gekennzeichnet,**
daß der im Hauptstromkreis liegende elektronische Schalter durch einen Feldeffekttransistor (6) gebildet ist,
daß beide Feldeffekttransistoren (6, 15) vom gleichen Leitfähigkeitstyp sind und
daß gleichnamige Anschlüsse (s) der beiden Feldeffekttransistoren (6, 15) und der Strommeßwiderstand (3) miteinander verbunden sind.

3. Umrichter nach Anspruch 2,
**dadurch gekennzeichnet,**
daß die Gate-Elektroden der beiden Feldeffekttransistoren (6, 15) miteinander verbunden sind.

4. Umrichter nach einem der Ansprüche 1 bis 3,
**dadurch gekennzeichnet,**
daß der Kondensator (16) und eine Sollspannungsquelle (2) einpolig an einem Bezugspotential liegen und mit ihren freien Anschlüssen an die Eingänge eines Komparators (4) geführt sind, dessen Ausgang mit einem Sperreingang der Steuerschaltung (8) verbunden ist.

5. Umrichter nach Anspruch 4,
**dadurch gekennzeichnet,**
daß zwischen dem Kondensator (16) und dem Komparator (4) oder zwischen der Sollspannungsquelle (2) und dem Komparator (4) eine Quelle für ein synchrones Dreiecksignal angeordnet ist.

6. Umrichter nach einem der Ansprüche 1 bis 3,
**dadurch gekennzeichnet,**
daß der Kondensator (16) und eine Sollspannungsquelle (2) einpolig an einem Bezugspotential liegen und mit ihren freien Anschlüssen an die Eingänge eines Operationsverstärkers (4) geführt sind, dessen Ausgang mit einem Pulsbreitenmodulator der Steuerschaltung (8) verbunden ist und im Falle der Strombegrenzung den Pulsbreitenmodulator sperrt.

7. Umrichter nach einem der Ansprüche 1 bis 3,
**dadurch gekennzeichnet,**
daß der Kondensator (16) und eine Sollspannungsquelle (2) einpolig an einem Bezugspotential liegen und mit ihren freien Anschlüssen an die Eingänge eines Operationsverstärkers (4) geführt sind, dessen Ausgang mit einem spannungsgesteuerten Oszillator der Steuerschaltung (8) verbunden ist und im Falle der Strombegrenzung die Frequenz des Oszillators herabsetzt.

8. Umrichter nach einem der vorgehenden Ansprüche,

6

EP 0 526 498 B1

**dadurch gekennzeichnet,**
daß der Meßwiderstand (3) zugleich als Istwertgeber eines Stromreglers mit überlagerter Spannungsregelung dient, bei dem der Istwert der Spannung der Sollwert der Stromregelung ist.

## Claims

1. Pulsed converter with current limiting, having an electronic switch which is arranged in the main circuit and connected by its control input to a control circuit and capable of being alternately switched on and off by the control circuit, having a current sensor arranged in series with the electronic switch, having an evaluation arrangement arranged between the current sensor and a capacitor (16) with a discharge circuit (17), and having a control device (4, 8) which is connected to the capacitor (16) and, in the case of capacitor voltages lying above a predetermined limiting value, controls the control circuit (8) to the effect of limiting the pulse current flowing in the main circuit, characterized in that the current sensor is formed by a measuring resistor (3) and the evaluation arrangement is formed by a further electronic switch, and in that the further electronic switch which is otherwise inhibited can be placed in the conductive state in each case during the switched-on phase of the electronic switch arranged in the main circuit, and in that the further electronic switch is formed by the source-drain junction of a field-effect transistor (15), and in that the source-drain junction of the field-effect transistor (15) is directed in such a way that the reverse diode (15a) of the field-effect transistor (15) is polarized in the conducting direction with respect to the voltage occurring on the measuring resistor (3), and in that the measuring resistor (3) is dimensioned in such a way that the voltage dropped at it is smaller than the threshold voltage of the reverse diode (15a) of the field-effect transistor (15).

2. Converter according to Claim 1, characterized in that the electronic switch located in the main circuit is formed by a field-effect transistor (6), in that both field-effect transistors (6, 15) are of the same conductance type, and in that terminals (s) with the same polarity of the two field-effect transistors (6, 15) and the current measuring resistor (3) are connected to one another.

3. Converter according to Claim 2, characterized in that the gate electrodes of the two field-effect transistors (6, 15) are connected to one another.

4. Converter according to one of Claims 1 to 3, characterized in that the capacitor (16) and a reference voltage source (2) are connected in single pole fashion to a reference potential and are connected by their free terminals to the inputs of a comparator (4) whose output is connected to an inhibiting input of the control circuit (8).

5. Converter according to Claim 4, characterized in that a source for a synchronous triangular-waveform signal is arranged between the capacitor (16) and the comparator (4) or between the reference voltage source (2) and the comparator (4).

6. Converter according to one of Claims 1 to 3, characterized in that the capacitor (16) and a reference voltage source (2) are connected in single pole fashion to a reference potential and are connected by their free terminals to the inputs of an operational amplifier (4) whose output is connected to a pulse-width modulator of the control circuit (8) and inhibits the pulse-width modulator in the case of current limiting.

7. Converter according to one of Claims 1 to 3, characterized in that the capacitor (16) and a reference voltage source (2) are connected in single pole fashion to a reference potential and are connected by their free terminals to the inputs of an operational amplifier (4) whose output is connected to a voltage-controlled oscillator of the control circuit (8) and reduces the frequency of the oscillator in the case of current limiting.

8. Converter according to one of the preceding claims, characterized in that the measuring resistor (3) serves simultaneously as an actual value generator of a current controller with superimposed voltage control, in which the actual value of the voltage is the reference value of the current control.

7

**Revendications**

1. Convertisseur de courant continu cadencé à limitation de courant, comprenant un interrupteur électronique, qui est disposé dans le circuit principal, qui est connecté par son entrée de commande à un circuit de commande et qui est susceptible d'être fermé et ouvert en alternance par le circuit de commande, un capteur de courant disposé en série avec l'interrupteur électronique, un dispositif d'exploitation disposé entre le capteur de courant et un condensateur (16) à circuit (17) de décharge et un dispositif (4, 8) de commande, qui est connecté au condensateur (16) et dans lequel, lorsque la tension aux bornes du condensateur dépasse une valeur limite prescrite, le circuit (8) de commande commande en vue d'une limitation du courant impulsionnel passant dans le circuit principal,
   caractérisé en ce que
   le capteur de courant est formé d'une résistance (3) de mesure et le dispositif d'exploitation est formé d'un autre interrupteur électronique, l'autre interrupteur électronique, qui sinon est ouvert, est susceptible d'être commandé pour passer à l'état conducteur pendant la période de conduction de l'interrupteur électronique disposé dans le circuit principal, l'autre interrupteur électronique est formé par la section source-drain d'un transistor (15) à effet de champ, la section source-drain du transistor (15) à effet de champ est disposée, de telle sorte que la diode (15a) inverse du transistor (15) à effet de champ est polarisée dans le sens passant par rapport à la tension apparaissant aux bornes de la résistance (3) de mesure et la résistance (3) de mesure a une valeur telle que la chute de tension à ses bornes est plus petite que la tension de seuil de la diode (15a) inverse du transistor (15) à effet de champ.

2. Convertisseur de courant continu suivant la revendication 1,
   caractérisé en ce que
   l'interrupteur électronique se trouvant dans le circuit principal est formé d'un transistor (6) à effet de champ,
   les deux transistors (6, 15) à effet de champ sont du même type de conduction et les bornes (s) de même nom des deux transistors (6, 15) à effet de champ et la résistance (3) de mesure de courant sont reliées les unes aux autres.

3. Convertisseur de courant continu suivant la revendication 2,
   caractérisé en ce que
   les électrodes de grille des deux transistors (6, 15) à effet de champ sont reliées l'une à l'autre.

4. Convertisseur de courant continu suivant l'une des revendications 1 à 3,
   caractérisé en ce que
   le condensateur (16) et une source (2) de tension de consigne sont mis à un potentiel de référence par une borne et sont reliés par leurs bornes libres aux entrées d'un comparateur (4), dont la sortie est reliée à une entrée de blocage du circuit (8) de commande.

5. Convertisseur de courant continu suivant la revendication 4,
   caractérisé en ce que
   une source de signal synchrone triangulaire est disposée entre le condensateur (16) et le comparateur (4) ou entre la source (2) de tension de consigne et le comparateur (4).

6. Convertisseur de courant continu suivant l'une des revendications 1 à 3,
   caractérisé en ce que
   le condensateur (16) et une source (2) de tension de consigne sont mis à un potentiel de référence par une borne et sont connectés par leurs bornes libres aux entrées d'un amplificateur (4) opérationnel, dont la sortie est reliée à un modulateur par largeur d'impulsions du circuit (8) de commande et qui bloque le modulateur par largeur d'impulsions dans le cas de la limitation de courant.

7. Convertisseur de courant continu suivant l'une des revendications 1 à 3,
   caractérisé en ce que
   le condensateur (16) et une source (2) de tension de consigne sont mis à un potentiel de référence par une borne et sont connectés par leurs bornes libres aux entrées d'un amplificateur (4) opérationnel, dont la sortie est reliée à un oscillateur, commandé en tension, du circuit (8) de commande et qui réduit la fréquence de l'oscillateur dans le cas de la limitation de courant.

8. Convertisseur de courant continu suivant l'une des revendications précédentes,

caractérisé en ce que

la résistance (3) de mesure sert en même temps de générateur de valeur réelle d'un régulateur de courant à régulation de tension simultanée, dans lequel la valeur réelle de la tension est la valeur de consigne de la régulation de courant.

# FIG 1

# FIG 2

## FIG 3

## FIG 4

EP 0 526 498 B1

FIG 5

12

# FIG 6

# FIG 7